# EUROPEAN PATENT SPECIFICATION

(11) **EP 3 328 908 B1**
(45) Date of publication and mention of the grant of the patent: **25.10.2023**
(21) Application number: 16728810.9
(22) Date of filing: 31.05.2016
(51) Int. Cl.: C08F 265/06

(54) **OLIGOMER SEED FOR SYNTHESIS OF UNIMODAL ACRYLIC BEAD PARTICLES**
OLIGOMERKEIM ZUR SYNTHESE UNIMODALER ACRYLPERLTEILCHEN
SEMENCE OLIGOMÈRE DESTINÉE À LA SYNTHÈSE DE PARTICULES DE BILLE ACRYLIQUE UNIMODALES

(30) Priority: 31.07.2015 US 201562199620 P
(43) Date of publication of application: 06.06.2018
(73) Proprietor: Rohm and Haas Company, Philadelphia, PA 19106 (US)
(72) Inventor: LAFLEUR, Edward E., Collegeville, PA 19426 (US); RAY, Himal, Collegeville, PA 19426 (US); NUNGESSER, Edwin, Collegeville, PA 19426 (US)
(74) Representative: Boult Wade Tennant LLP
(86) International application number: PCT/US2016/035020
(87) International publication number: WO 2017/023406

(56) References cited:
- EP-A1- 2 341 081
- WO-A1-2005/063826
- US-A1- 2007 066 761

## Description

### Reference to Related Applications

The present application claims the benefit of U.S. Provisional Application No. 62/199,620, filed on July 31, 2015.

### Field of the Invention

The present invention is related to acrylic beads prepared from oligomer seed particles.

### Background

WO2005/063826 A1_relates to a multilayer polymer latex comprising a seed, a rubbery core surrounding the seed, and a shell surrounding the rubbery core, in which the seed comprises a vinyl unit, a hydrophilic unit and a crosslinker unit, as well as a preparation method thereof.

EP 2 341 081 A1 relates to a process for making uniform polymer beads.

US 2007/066761 A1 relates to a method for making swellable particles.

Acrylic beads are commercially used in plastics additives, leather, wall and package coating applications. Beads can be made in an aqueous emulsion with the use of an emulsion prepared oligomer seed. The submicron oligomer seed is rapidly swollen by monomers in a single sorption step to yield particles of several microns in average diameter, while being within three standard deviations of the mean. Oligomer seed particles are advantageous for minimization of the formation of under- and oversized during the polymerization process. In the presence of an initiator, the monomer oligomer seed particles are converted into polymer particles in the first stage of the reaction process. Subsequently, an outer stage polymerization is carried out, designed to graft a second stage polymer onto the first stage polymer particles.

This process, at times, can produce significant gel particles as well as a wide distribution of particle sizes including a significant amount of large mode particles. These issues provide challenges to filtration processes and impact product quality. Therefore, a method to ensure consistent control of the quality of acrylic beads resulting in beads with a long shelf life, the ability to endure numerous freeze and thaw cycles, with mechanical and chemical stability, and free of oversized gel particles, is desired.

### SUMMARY OF THE INVENTION

In the aspect, there is provided a process for making acrylic bead particles as defined in claim 1 appended hereto.

### BRIEF DESCRIPTION OF THE FIGURES

For the purpose of illustrating the present invention, the figures show a form of the present invention which is presently preferred. However, it should be understood that the present invention is not limited to the embodiments shown in the figures.
Figure 1 depicts particle size distribution curves for four samples of the oligomer seed latex prepared without copolymerizable surfactant.
Figure 2 depicts particle size distribution curves for four samples the oligomer seed latex prepared with copolymerizable surfactant.

### DETAILED DESCRIPTION OF THE INVENTION

Herein is described making preseed particles comprising the steps of: mixing initial seed latex particles, a monomer mixture comprising at least one monomer and at least one copolymerizable surfactant, a chain transfer agent and at least one initiator to form the preseed particles.

A "polymer," as used herein and as defined by FW Billmeyer, JR. in Textbook of Polymer Science, second edition, 1971, is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

"Polymerizing" herein means the reacting of monomers to form oligomer or polymer or a mixture thereof.

Polymer and oligomer molecular weights can be measured by standard methods such as, for example, size exclusion chromatography, short column size exclusion chromatography, or intrinsic viscosity. Generally, polymers have weight-average molecular weight (Mw) of 10,000 or more. Polymers may have extremely high Mw; some polymers have Mw above 1,000,000; typical polymers have Mw of 1,000,000 or less. As used herein, "low molecular weight polymer" means a polymer that has Mw of less than 10,000; and "high molecular weight polymer" means a polymer that has Mw of 10,000 or higher. Some polymers are crosslinked, and crosslinked polymers are considered to have infinite molecular weight.

"Oligomers," as used herein, are structures similar to polymers except that oligomers have fewer repeat units and have lower molecular weight. Normally, oligomers have 2 or more repeat units. Generally, oligomers have Mw of from 500 to 10000.

Molecules that can react with each other to form the repeat units of an oligomer or a polymer are known herein as "monomers." Typical monomers have Mw of less than 400. Among the monomers useful in the present invention are molecules, for example, that have at least one carbon-carbon double bond.

When particles are contemplated to be used in the practice of the present invention, it is sometimes useful to characterize the size of the particles. When particles are spherical or nearly spherical, it is useful to characterize the size by characterizing the diameter of the particles.

When the diameters of a collection of particles have been characterized, it is often apparent that the collection has a distribution of diameters. One characteristic of such distributions is the mean particle diameter. Another characteristic of such distributions is the uniformity of the particle diameters.

It is contemplated that the appropriate technique will be chosen to characterize the diameters of particles of interest, depending on the type and form of particles to be measured. For example, if the particles of interest are dispersed in a transparent medium, light scattering may be used to characterize the diameter, or (if the particles are large enough), optical microscopy may be used. For another example, if the particles are dry, they may be characterized by passing them through a series of sieves of various sizes or by examining them with an electron microscope or with an optical microscope. It is also contemplated that particles of interest that are dispersed could be characterized by drying a sample of such particles and then characterizing that dried sample using a technique appropriate for dry particles.

When particles are dispersed in a fluid, the fluid may be an aqueous fluid or a non-aqueous fluid. The fluid in which particles are dispersed is called the "dispersion medium." Aqueous fluids are defined herein as fluids that contain 50% to 100% water, by weight based on the weight of the fluid. Some aqueous fluids contain water in an amount, by weight based on the weight of the fluid, of 75% to 100%, or 90% to 100%. Non-aqueous fluids are fluids that are not aqueous fluids. When particles are dispersed in a fluid, the dispersion (i.e., the combination of dispersed particles and the fluid in which they are dispersed) may be, for example, a suspension, an emulsion, a miniemulsion, a microemulsion, a latex, or a combination thereof. A dispersion of particles that are dispersed in an aqueous fluid is known herein as an "aqueous dispersion."

As used herein, a particle is "swellable" if there can be found a compound that is readily absorbed by the particle, such that the particle is larger after absorbing that compound. If the swellability of the particles is tested, it is contemplated that the size of the swollen particle could be measured by any particle-size test that is appropriate for that type of swollen particle.

Herein is described a method of making preseed particles, and that method includes mixing particles (known herein as "initial seed latex particles") or the preseed particles with a monomer mixture comprising at least one monomer and at least one copolymerizable surfactant, and at least one initiator and a chain transfer agent.

Initial seed latex particles may be any material that is in particulate form. In some embodiments, the initial seed latex particles are dispersed in a fluid. In some embodiments, the initial seed latex particles are dispersed in an aqueous fluid.

Initial seed latex particles may have any composition. In some embodiments, initial seed latex particles are organic compounds. In some embodiments, initial seed latex particles contain polymer, which may be made by any method, including, for example, bulk, solution, emulsion, dispersion, or suspension polymerization, or by variants or combinations thereof. In some embodiments, initial seed latex particles are made by a polymerization method (such as, for example, suspension or emulsion polymerization or a variant or combination thereof) that produces particles that contain polymer; in some cases, such particles are suitable for use as initial seed latex particles of the present invention.

Among embodiments in which initial seed latex particles are in the form of an aqueous dispersion, the dispersion may be, for example, a suspension, an emulsion, a miniemulsion, a microemulsion, a latex, or a combination thereof.

The initial seed latex particles can be produced by any of a wide variety of methods. If the methods of producing the initial seed latex particles involves polymerization, that polymerization may be a relatively simple, single-step operation, or the polymerization may be more complex, possibly involving multiple polymerizations. If multiple polymerizations are used, each of the various polymerizations may use the same monomer or monomers as any of the other polymerizations; or may use different monomer or monomers from any of the other polymerizations; or may use a combination of same monomer or monomers as any of the other polymerizations and different monomer or monomers from any of the other polymerizations. If multiple polymerizations are used, they may all be of the same type (for example, emulsion polymerization or suspension polymerization or dispersion polymerization); they may be different types (for example, one or more emulsion polymerizations preceding and/or following one or more suspension polymerizations); or a combination of same-type and different-type polymerizations may be used.

In some embodiments, some or all of the initial seed latex particles contain polymer that was made by suspension polymerization. Independently, in some embodiments, some or all of the initial seed latex particles contain polymer that was made by dispersion polymerization. Independently, in embodiments, some or all of the initial seed latex particles contain high molecular weight polymer.

In some embodiments, some or all of the initial seed latex particles contain polymer or oligomer or a mixture thereof that was made by a method that includes emulsion polymerization. In some of such embodiments, some or all of the polymer in the initial seed latex particles is low molecular weight polymer. Independently, in some of such embodiments, the emulsion polymerization includes the use of one or more chain transfer agents.

In some embodiments of the present invention, initial seed latex particles are used that have mean particle diameter of 0.1 micrometer or more; or 0.2 micrometer or more; or 0.5 micrometer or more. In some embodiments of the present invention, initial seed latex particles are used that have mean particle diameter of 50 micrometers or less; or 25 micrometers or less; or 12 micrometers or less.

In the practice of the present invention, the method of making preseed particles involves mixing initial seed latex particles with a mixture that includes at least one monomer. In some embodiments, at least one monomer is used that is capable of radical polymerization. In some embodiments, at least one vinyl monomer is used. In various other embodiments, at least one monomer is used that has low solubility in water. In some embodiments, at least one monomer is used that has a Hansch parameter of greater than 1; or greater than 2; or greater than 2.5, as calculated by the United States Environmental Protection Agency Kowwin^{™} software. In some embodiments, all the monomers used in making preseed particles have low solubility in water.

Some useful monomers for the present invention, include, but are not limited to vinyl aromatic monomers (including, for example, styrene and substituted styrenes), alkyl (meth)acrylates, substituted alkyl (meth)acrylates, and mixtures thereof. Some suitable monomers are alkyl (meth)acrylates with alkyl groups that have 2 or more carbon atoms, or 3 or more carbon atoms, or 4 or more carbon atoms. Independently, some suitable monomers are alkyl (meth)acrylates with alkyl groups that have 25 or fewer carbon atoms, or 12 or fewer carbon atoms, or 8 or fewer carbon atoms. In some embodiments, the monomers used include vinyl aromatic monomers, alkyl acrylates, and mixtures thereof. In some embodiments, the monomers used include at least one alkyl acrylate, the alkyl group of which has 4 to 8 carbon atoms. In some embodiments, the monomers used include butyl acrylate. Independently, in some embodiments, the monomers used include styrene, at least one substituted styrene, or a mixture thereof. In some embodiments, the monomers used include styrene. In some embodiments, the monomers used include a mixture of styrene and butyl acrylate.

The monomer is mixed with a copolymerizable surfactant to form the monomer mixture useful in this invention. Copolymerizable surfactants are ionic or non ionic emulsifiers that contain a reactive functional group such as an allylic end group or a vinyl functionalized group. One example of a copolymerizable surfactant is a 36% aqueous sodium dodectyl allyl sulfosuccinate (TREM LF-40), α-Sulfo-ω-[1-[nonylphenoxy)methyl]-2-(2-propenyloxy) ethoxy]-poly(oxy-1,2-ethandiyl) and α-Sulfo-ω-[1-[nonylphenoxy)methyl]-2-(2-propenyloxy) ethoxy]-poly(oxy-1,2-ethandiyl), ammonium salt solution.

Also applicable are amphoteric surfactants of the general formula:

CH₂ =C(CH₃)-C(O)₂-(CH₂)i-N⁺R'-R"-(CH₂)J-X,

wherein R' and R" are, independently, alkyl groups with one or two carbon atoms per molecule, X is SO₃⁻ or CO₂⁻, I is 2 or 3, and j is from 1 to 6.

The amount of surfactant used in some embodiments, by weight of surfactant based on total weight of the ingredient or ingredients in the mixture, is 0.05% or more; or 0.1% or more. Independently, in some embodiments the amount of surfactant used, by weight of surfactant based on total weight of the ingredient or ingredients in the emulsion, is 10% or less; or 5% or less.

In the practice of the present invention, the method of making preseed particles involves the use of at least one initiator. An initiator is a compound that is capable of producing at least one free radical under conditions in which that free radical can interact with monomer. Conditions that cause some initiators to produce at least one free radical include, for example, elevated temperature, exposure to photons, exposure to ionizing radiation, reactions of certain compounds (such as, for example, oxidation-reduction pairs of compounds), and combinations thereof.

Some initiators that are suitable for use in the method of the present invention of making preseed particles are water-soluble. As used herein, an initiator is "water-soluble" if it has solubility in water of greater than 1% by weight, based on the weight of water. Some suitable water-soluble initiators are, for example, persulfates, including, for example, sodium persulfate and ammonium persulfate. Some persulfate initiators generate radicals either by being heated or by being reacted with a reductant such as, for example, isoascorbic acid, sodium sulfoxylate formaldehyde, or sodium hydrogensulfite.

Other initiators that are suitable for use in the method of the present invention of making preseed particles are oil-soluble. As used herein, an initiator is "oil-soluble" if it has low solubility in water. Some suitable oil-soluble initiators, for example, have solubility in water, by weight, based on the weight of water, of 1% or less; or 0.1% or less; or 0.01% or less.

Some initiators that are suitable for use in the method of the present invention of making preseed particles are, for example, oil-soluble peroxides and oil-soluble azo compounds. Suitable oil-soluble peroxides include, for example, oil-soluble peroxyesters (also sometimes called percarboxylic esters or peroxycarboxylic esters), oil-soluble peroxydicarbonates, oil-soluble peroxides (such as, for example, oil-soluble dialkyl peroxides, oil-soluble diacyl peroxides, and oil-soluble hydroperoxides), oil-soluble peroxyketals, and oil-soluble ketone peroxides. Peroxyesters have the chemical structure 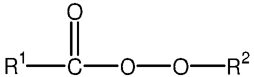 where R¹ and R² are organic groups, which may be the same as each other or different from each other. R¹ and R² may be, independently of each other, straight, branched, cyclic, or a combination thereof. In some embodiments, R¹ and R² may be, independent of each other, alkyl groups, alkenyl groups, aryl groups, substituted versions thereof, or combinations thereof. In some embodiments, R¹ is an alkyl group with 4 or more carbon atoms, or an alkyl group with 6 or more carbon atoms. In some embodiments, R¹ is an alkyl group with 20 or fewer carbon atoms, or an alkyl group with 10 or fewer carbon atoms. Independently, in some embodiments, R² is an alkyl group with 1 or more carbon atoms, or an alkyl group with 3 or more carbon atoms. Independently, in some embodiments, Ris an alkyl group with 10 or fewer carbon atoms, or an alkyl group with 6 or fewer carbon atoms. Suitable initiators include, for example, t-butyl peroctoate. Among suitable oil-soluble diacyl peroxides are, for example, aromatic diacyl peroxides (such as, for example, benzoyl peroxide) and aliphatic diacyl peroxides (such as, for example lauroyl peroxide).

Some azo compounds suitable as oil-soluble initiators are those, for example, with structure R³-N=N-R⁴, where R³ and R⁴ are, independently, unsubstituted or substituted organic groups, at least one of which contains a nitrile group. Some examples of such azo compounds are those with the structure 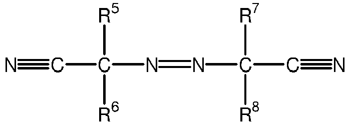 where R⁵, R⁶, R⁷, and R⁸ are each, independently of each other, a hydrogen or an organic group such as, for example, a methyl group, an ethyl group, an alkyl group with 3 or more carbon atoms, or a substituted version thereof. In some embodiments, R⁵, R⁶, R⁷, and R⁸ are each, independently of each other, selected from the group consisting of alkyl groups with 1 to 3 carbon atoms. Some suitable initiators include, for example, 2,2'-azobis(2-methylbutanenitrile) and 2,2'-azobis(2,4-dimethylpentanenitrile).

Mixtures of suitable initiators can also be used.

In some embodiments the amount of initiator will be, by weight based on the total weight of monomer used in the process of the present invention for making preseed particles, 0.1% or higher, or 0.2% or higher, or 0.5% or higher. In some embodiments the amount of initiator will be, by weight based on the total weight of monomer used in the process of the present invention for making preseed particles, 8% or less, or 4% or less, or 2% or less.

In the practice of the present invention, the method of making preseed particles also involves the use of at least one chain transfer agent (also referred to as a promoter). Chain transfer agents are compounds capable of participating in a chain transfer reaction during radical polymerization of monomer. Some suitable chain transfer agents are, for example, halomethanes, disulfides, thiols (also called mercaptans), and metal complexes. Also suitable as chain transfer agents are various other compounds that have at least one readily abstractable hydrogen atom. Mixtures of suitable chain transfer agents are also suitable. Suitable thiols include, for example, aryl thiols, alkyl thiols, alkyl dithiols, mercaptoalkanols, and alkyl esters of thioalkyl carboxylic acids. Some suitable thiols are, for example, benzene thiol, dodecyl mercaptans, hexanethiol, butanethiol, butyl 3-mercaptopropionate, ethyl 3-mercaptopropionate, butyl mercaptoacetate, 1,6-hexanedithiol, 4-mercapo-2-butanol, 4-mercapto-1-butanol, and 2-mercapto-ethanol. Suitable halomethanes include, for example, chloroform, tetrabromomethane, tetrachloromethane, and bromotrichloromethane. Some suitable disulfides include, for example, dialkyldisulfides (such as, for example diethyldisulfide), dialkylaryldisulfides (such as, for example, dibenzyldisulfide), and diaryldisulfides (such as, for example, diphenyldisulfide).

Mixtures of suitable chain transfer agents are also suitable.

When practicing the process of the present invention for making preseed particles, in some embodiments the amount of chain transfer agent will be, by weight based on the total weight of monomer used in the process of the present invention for making preseed particles, 2% or more; or 5% or more; or 10% or more. In some embodiments the amount of chain transfer agent will be, by weight based on the weight of monomer, 30% or less; or 25% or less.

In some embodiments, the preseed particle formation mixture of the present invention optionally further includes one or more stabilizers. Stabilizers are water-soluble polymers such as, for example, poly(vinyl alcohol), cellulose ethers, and mixtures thereof. Suitable cellulose ethers include, for example, cellulose that has been subjected to etherification, in which some or all of the H atoms in the hydroxyl groups are replaced by alkyl groups, hydroxy alkyl groups, alkyl ether groups, or a mixture thereof. In some of the embodiments in which one or more stabilizers are used in the process of the present invention for making preseed particles, the amount of stabilizer is, by weight of stabilizer, based on the dry weight of initial seed latex particles, 1% or more; or 2% or more. Independently, in some of the embodiments in which one or more stabilizers are used in the process of the present invention for making preseed particles, the amount of stabilizer is, by weight of stabilizer, based on the dry weight of initial seed latex particles, 15% or less; or 7% or less. In some embodiments, no stabilizer is used in the process of the present invention for making preseed particles.

In some embodiments, some or all of the initial seed latex particles are in the form of an aqueous dispersion; these initial seed latex particles are placed in a vessel; and the "remaining ingredients" (i.e., all the ingredients of the swellable preseed particle formation mixture other than the initial seed latex particles) are then added to that vessel. In various embodiments, the remaining ingredients may be added individually to the vessel containing initial seed latex particles; or some or all of the remaining ingredients may be mixed together before the mixture is added to the vessel containing initial seed latex particles; or some combination of individual remaining ingredients and mixtures of remaining ingredients may be added to the vessel containing initial seed latex particles. Notwithstanding the foregoing, before being added to other ingredients, the copolymerizable surfactant is mixed with at least one monomer.

Independently, in some embodiments, one or more of the remaining ingredients are in the form of an aqueous dispersion prior to being added to the vessel containing initial seed latex particles. When such an aqueous dispersion is formed, any method of forming a dispersion may be used. For example, one or more remaining ingredients may be mixed with water and one or more surfactants to form an emulsion. In some embodiments, the emulsion is formed by mixing one or more remaining ingredients in the presence of mechanical agitation. In some embodiments, the mechanical agitation provides "high shear" (i.e., it imparts a high shear rate to the ingredients).

When an aqueous dispersion is formed using mechanical agitation, the mechanical agitation may be supplied by any method that results in an aqueous dispersion. Some suitable mechanical agitation methods include, for example, shaking the mixture, stirring the mixture, or passing the mixture through a static mixing element. Suitable stirring methods include, for example, contacting the mixture with a rotating device such as, for example, a magnetic bar or an impeller. One suitable arrangement of a rotating device, for example, is to fix the rotating device in a pipe or other conduit and pass the mixture continuously through the pipe or other conduit, past the rotating device. Another suitable arrangement of a rotating device, for example, is to place a fixed volume of mixture and the rotating device into a container and rotate the rotating device within the fixed volume of mixture until a dispersion is formed.

Some suitable impellers include, for example, axial flow impellers (including, for example, propellers and pitched blade turbines), radial flow impellers (including, for example, open flat blade impellers, disk style impellers, backswept open impellers, and backswept with disk impellers), hydrofoil impellers, high shear impellers (including, for example, bar turbines, sawtooth impellers, and rotor/stators), and close-clearance impellers (including, for example, anchor impellers, helical ribbons, and wall scrapers). Sometimes, the process of forming a dispersion using a high shear impeller is referred to as "homogenizing."

In the process of the present invention for making preseed particles, the ingredients are mixed under conditions in which the monomer is capable of polymerizing. In some embodiments, such conditions are established when the conditions necessary for the initiator to form free radicals are present. For example, in such embodiments, when an initiator is used that produces free radicals when the temperature is high enough, it is contemplated that the ingredients will be mixed at a temperature high enough so that the initiator produces enough free radicals so that the monomer in the mixture is capable of polymerizing. It is further contemplated that the conditions under which mixing takes place will also provide other aspects that may be necessary for polymerization to occur, such as, for example, sufficient agitation to ensure mixing, and, for another example, transport conditions that allow free radicals and monomer molecules to react.

In some embodiments of the present invention, the mean particle diameter of the preseed particles is larger than the mean particle diameter of the initial seed latex particles. In some embodiments, the mean particle diameter of the preseed particles of the present invention is larger than the mean particle diameter of the initial seed latex particles by a factor of 1.5 times or higher; or 2 times or higher; or 4 times or higher. Independently, in some embodiments, the preseed particles have mean particle diameter of 0.25 micrometers or more; or 0.5 micrometers or more; or 1 micrometer or more; or 2 micrometers.

In some embodiments of the present invention, the preseed particles can have a mean particle diameter of from 50 to 300 nanometers. Any and all values from 50 to 300 nanometers are included herein and disclosed herein; for example, the preseed particles can have a mean particle diameter of from 70 to 300 nanometers, or from 100 to 200 nanometers.

The preseed particles can then be mixed with a monomer mixture comprising at least one monomer and at least one copolymerizable surfactant, and at least one initiator to form oligomer seed particles. In some embodiments, it is contemplated that any or all of the at least one monomer/copolymerizable surfactant mixture, and the at least one initiator used in making the oligomer seed particles may be the same as, different from, or a mixture thereof, as any or all of the at least one monomer/copolymerizable surfactant mixture, and the at least one initiator used in making the preseed particles. It is further contemplated that, in some embodiments, this process (i.e., using preseed particles to produce oligomer seed particles) could be repeated as many times as desired.

In some embodiments of the present invention, the mean particle diameter of the oligomer seed particles is larger than the mean particle diameter of the swellable particles. In some embodiments, the mean particle diameter of the oligomer seed particles of the present invention is larger than the mean particle diameter of the preseed particles by a factor of 1.5; or 2; or 3; or 4; or 5. Independently, in some embodiments, the oligomer seed particles have mean particle diameter of 0.1 to 1 micrometers; or 0.5 to 0.75 micrometers.

In some embodiments of the present invention, the oligomer seed particles have a weight average molecular weight (Mw) of from 500-10,000. Any and all weight average molecular weights between 500 and 10,000 are included herein and disclosed herein; for example, the oligomer seed particles can have a Mw of from 500 to 7000, from 600 to 5000, or from 1000 to 3000.

The oligomer seed particles of the present invention can be used to make acrylic bead particles, the method of making such acrylic bead particles includes, among other steps, mixing at least one monomer with the oligomer seed particles wherein the mixing is performed under conditions in which the monomer is capable of forming oligomer or polymer or a mixture thereof. The monomer(s) used in the process to make acrylic beads can independently be the same as or different from any or all of the monomers used in the monomer/surfactant mixture for making the preseed particles and the oligomer seed particles.

As used herein "conditions in which monomer is capable of forming oligomer or polymer or a mixture thereof" means conditions in which polymerization can proceed efficiently. To test if a particular set of conditions are "conditions in which monomer is capable of forming oligomer or polymer or a mixture thereof", the conditions could be held constant, without adding or removing any ingredients, and the amount of monomer present could be measured. Under "conditions in which monomer is capable of forming oligomer or polymer or a mixture thereof," after conditions are held constant for one hour, 5% or more of the monomer (by weight, based on the weight of monomer present at the beginning of the one hour period) will have reacted to form oligomer or polymer or a mixture thereof. In some cases, 10% or more, or 20% or more, or 50% or more of the monomer will have reacted to form oligomer or polymer or a mixture thereof.

Polymerizing in the practice the method of the present invention for making preseed particles is conducted by providing conditions in which the monomers can and do react to form at least one oligomer or polymer or mixture thereof. In some embodiments, the amount of monomer consumed in the formation of polymer is 90% or more; or 95% or more; or 99% or more, by weight of monomer consumed, based on the total weight of monomer used in the process of making preseed particles.

Polymerizing is conducted by providing conditions in which the subsequent monomers can and do react to form at least one oligomer or polymer or mixture thereof. In some embodiments, the amount of monomer consumed in the formation of polymer is 90% or more; or 95% or more; or 99% or more, by weight of monomer consumed, based on the total weight of monomer used in the process of making acrylic bead particles. The monomer(s) may be mixed with the oligomer seed particles before the start of the polymerization, during the polymerization, or a combination thereof. In some embodiments, exactly one step of mixing oligomer seed particles with monomer and exactly one step of polymerizing the subsequent monomer will be performed. In some embodiments, more than one of such mixing step may be performed, and, independently, in some embodiments, more than one polymerizing step may be performed. In some embodiments, after a first portion of monomer is mixed with the oligomer seed particles and polymerized, the resulting composition may be mixed with one or more further portions of monomer (each of which may independently be the same as or different from monomers included in previous parts of the process), which would then be polymerized.

In some embodiments, the acrylic bead particles contain high molecular weight polymer or crosslinked polymer or a mixture thereof. In some embodiments, the polymer made by polymerizing the monomer(s) contains a high molecular weight polymer or a crosslinked polymer or a mixture thereof. One useful method of observing the presence of crosslinked polymer is to test the solubility of the polymer of interest; crosslinked polymers are generally not soluble in any solvent. In many samples of acrylic bead particles, the amount of polymer that is crosslinked is characterized by the portion of the acrylic bead particles that is not soluble. In some embodiments, polymeric resin particles made by polymerizing the monomer(s) contains an amount of material that is not soluble, by dry weight, based on the dry weight of acrylic bead particles, of 50% or more; or 75% or more; or 90% or more. The acrylic bead latex is also free of oversize gel particles.

Beads are used in many industrial coating applications. The lattices of beads can be used in the formulation of aqueous matte coatings. The monodispersed beads can be utilized as calibration standards in biochemical and biomedical analyses. Monodispersed beads can also be used as general standards for blood cell counters. Bead particles can also have significant advantage in different immunoassays. Uniform monodispersed beads can function as graded refractive index lenses for optical displays.

### EXAMPLES

### Comparative Example 1 (Process 1, Pre-Seed Polymer)

This example illustrates the preparation of crosslinked polymer pre-seeds of 0.25 *µm* in diameter for making large seed particles in aqueous dispersion. The following mixtures A-C as shown in Table 1 were prepared with deionized water.

**Table 1**

| Mixture | Component | Parts by Weight |
|---|---|---|
| A1 | Water | 180 |
| | Sodium Carbonate | 0.40 |
| B1 | n-Butyl Acrylate | 98.0 |
| | Allyl Methacrylate | 1.75 |
| | 1,4 - Butanediol Diacrylate | 0.25 |
| | 22.5% aqueous Sodium Dodecylbenzenesulfonate | 2.22 |
| | Water | 40.8 |
| C1 | Sodium Persulfate | 0.06 |
| | Water | 11.9 |

A reactor equipped with a stirrer and condenser and blanked with nitrogen was charged with Mixture A1 and heated to 83°C. Then 10% of emulsified Mixture B1 and 25% of Mixture C1 were added to the reactor. The temperature was maintained at 83°C and the mixture was stirred for 60 minutes, after which the remaining Mixture B1 and Mixture C1 were added to the reactor with stirring over a period of 120 minutes. Stirring was continued at 83°C for 90 minutes, after which the reactor contents were cooled to room temperature. The particle size of the resulting particle pre-seeds was 0.25 µm as measured by a Brookhaven Instruments particle size analyzer BI-90.

### Comparative Example 2 (Oligomer Seed)

In this example, the pre-seed particles in the emulsion of Comparative Example 1 were grown to 0.56 µm diameter using n-butyl acrylate, styrene, and n-DDM. The following mixtures A2-G2 shown in Table 2 were prepared with deionized water:

**Table 2**

| Mixture | Component | Parts by Weight |
|---|---|---|
| A2 | Sodium Carbonate | 0.08 |
| | 9.76% aqueous Sodium Dodecylbenzenesulfonate | 0.01 |
| | Water | 156.00 |
| B2 | 30.10% aqueous emulsion from Comparative Example 1 | 29.80 |
| C2 | *n*-Butyl Acrylate | 81.80 |
| | Styrene | 18.20 |
| | 9.76% aqueous Sodium Dodecylbenzenesulfonate | 4.53 |
| | Water | 57.50 |
| D2 | 1-Dodecanethiol (n-dodecyl mercaptan) | 18.80 |
| | 9.76% aqueous Sodium Dodecylbenzenesulfonate | 0.58 |
| | Water | 47.40 |
| E2 | Sodium Persulfate | 0.11 |
| | Water | 47.40 |
| F2 | *t*-Butyl Hydroperoxide 70% | 0.30 |
| | Water | 15.00 |
| G2 | Sodium Formaldehyde Sulfoxylate | 0.20 |
| | Water | 6.67 |

Mixture A2 was added to the reactor of Comparative Example 1 and heated to 88°C with stirring. The air in the reactor was replaced with nitrogen. When the reactor temperature stabilized at 88°C, Mixture B2 was charged into the reactor. Emulsified Mixtures C2 and D2, and Mixture E2 were then added to the reactor, with stirring, over a period of 300 minutes. Stirring was continued at 88°C for 90 minutes. The reactor contents were cooled to 65°C. Mixtures F2 and G2 were then added and the reactor contents were maintained at 65°C with stirring for 1 hour, after which the reactor contents were cooled to room temperature. The resulting emulsion particles had an average diameter of 0.48 µm as measured by a Malvern Instruments particle size analyzer serial number MAL500864.

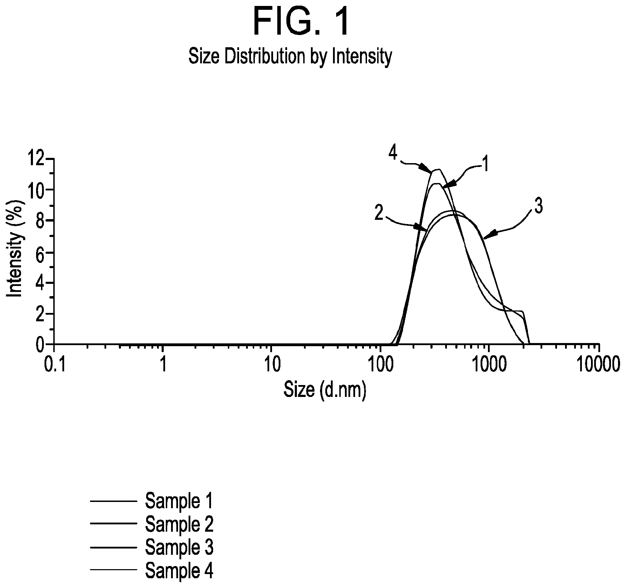

The particle size distribution data, Figure 1, for Comparative Example 2 is shown in Table 3 below.

**Table 3**

| Position | Diameter (nm) | Intensity (%) | Width (nm) |
|---|---|---|---|
| Peak - 1 | 475.4 | 93.6 | 291.3 |
| Peak-2 | 1730.0 | 6.4 | 206.5 |

### Comparative Example 3

The particles in the emulsion of Comparative Example 2 were expanded to create 5 µm diameter divergent lenses using n-butyl acrylate and allyl methacrylate in Stage I which was then followed by Stage II copolymerization of methyl methacrylate and ethyl acrylate. The following mixtures A3-G3 shown in Table 4 were prepared with deionized water:

**Table 4**

| Mixture | Component | Parts by Weight |
|---|---|---|
| Stage I | | |
| A3 | Water | 138.50 |
| B3 | | |
| | Aqueous emulsion from Example 2 at 29.88% solids | 0.105 |
| C3 | n-Butyl Acrylate | 76.80 |
| | Allyl Methacrylate | 3.20 |
| | 10% aqueous Sodium Dodecylbenzenesulfonate | 0.28 |
| | Water | 33.12 |
| D3 | *t*-Butyl Peroctoate | 0.427 |
| | 10% aqueous Sodium Dodecylbenzenesulfonate | 0.003 |
| | Water | 2.96 |

| Stage II | | |
|---|---|---|
| E3 | Methyl Methacrylate | 19.20 |
| | Ethyl Acrylate | 0.80 |
| F3 | Sodium Formaldehyde Sulfoxylate | 0.062 |
| | Water | 6.67 |
| | 10% aqueous Sodium Dodecylbenzenesulfonate | 0.017 |
| G3 | *t*-Butyl Hydroperoxide 70% | 0.089 |
| | Water | 10.05 |
| | 10% aqueous Sodium Dodecylbenzenesulfonate | 0.037 |

To the reactor of Example 1 was added A3 which was heated to 90°C with stirring. The air in the reactor was replaced by nitrogen. When the reactor temperature stabilized at 90°C, Mixture B3 was charged into the reactor. The reactor contents were stirred at 60°C for 1 hour. Mixture D3 was emulsified with a homogenizer and charged into the reactor. After 1 hour of agitation at 60°C, the reactor was gradually heated to 65-70°C while an exothermic polymerization occurred. After reaching peak temperature, agitation was continued while the reactor was cooled to 73°C in 30 minutes. Half of Mixture F3 was then charged to the reactor. Mixtures E3, the remainder of F3, and G3 were then separately added to the reactor over a period of 2 hours. The temperature was maintained between 73-75°C and stirring continued for 1 hour before the reactor was cooled to room temperature. The resulting emulsion particles had an average diameter of 4.71 µm and 0.1% of oversize particles in the size range of 19.71 to 27.78 µm as measured by CPS disc centrifuge particle size analyzer.

### Example 4 - Synthesis of perform 250 nm seed using Trem Lf-40 surfactant

The mixtures used for this synthesis are shown in Table 5. The initial mixture A4 (seed particles and DI water) was charged to a glass bottle. This mixture was sparged with nitrogen for 5 minutes to remove all oxygen. The bottle was sealed and placed in a Thermo Scientific water bath (temperature set at 85°C and RPM set at 60). Monomer mix was sparged with nitrogen for 5 minutes. The monomer emulsion B4 was then homogenized using a Cat X-250 at 2K RPM for 5 minutes. The homogenized monomer emulsion was then transferred to a bottle using a syringe. The mixture C4 was charged to the reactor. The reaction reached peak exotherm 2 hours later. The water bath temperature was maintained at 85°C throughout the reaction. Mixtures D4, E4, and F4 were then charged to the bottle. After 1 hour, the bottle was cooled to room temperature. The resulting emulsion particles were filtered through a cheese cloth. The average diameter of the particles was 0.25µm.

**Table 5**

| Mixture | Component | Parts by Weight |
|---|---|---|
| A4 | E-2086 (Seed) | 4 |
| | DI Water | 170 |
| B4 | Butyl Acrylate | 117.61 |
| | Allyl Methacrylate | 2.1 |
| | 1,4-Butane diol Dimethacrylate | 0.3 |
| | Trem LF-40 (36%) | 0.67 |
| | DI Water/Rinse | 40/1 |
| C4 - Initiator | Potassium persulfate | 0.65 |
| | DI Water/Rinse | 5/3 |
| D4 - Redox accelerator | Iron (0.1%) | 0.008 |
| E4 | Sodium Bisulfate | 0.0298 |
| | DI Water/Rinse | 5/3 |
| F4 | t-Butyl Hydroperoxide | 0.0205 |
| | DI Water/Rinse | 5/3 |

### Example 5

The pre-seed particles of Example 4 in the emulsion of the initial step were grown to 0.56 µm in diameter using n-butyl acrylate, styrene, and n-DDM. The following mixtures A5-G5 were prepared with deionized water. Mixtures used are shown in Table 6.

**Table 6**

| Mixture | Component | Parts by Weight |
|---|---|---|
| A5 | Sodium Carbonate | 0.08 |
| | 9.76% aqueous TREM LF 40 | 0.01 |
| | Water | 156.00 |
| B5 | 30.10% aqueous emulsion from Example 4 | 29.80 |
| C5 | n-Butyl Acrylate | 81.80 |
| | Styrene | 18.20 |
| | 9.76% aqueous TREM LF 40 | 4.53 |
| | Water | 57.50 |
| D5 | n-DDM | 18.80 |
| | 9.76 aqueous TREM LF 40 | 0.58 |
| | Water | 15.00 |
| E5 | Sodium Persulfate | 0.11 |
| | Water | 47.40 |
| F5 | *t*-Butyl Hydroperoxide 70% | 0.30 |
| | Water | 15.00 |
| G5 | Sodium Formaldehyde Sulfoxylate | 0.20 |
| | Water | 6.67 |

Mixture A5 was added to the reactor of the first step and heated to 88°C with stirring. The air in the reactor was replaced with nitrogen. When the reactor temperature stabilized at 88°C, Mixture B5 was charged into the reactor. Emulsified Mixtures C5 and D5, and Mixture E5 were then added to the reactor, with stirring, over a period of 300 minutes. Stirring continued at 88°C for 90 minutes. The reactor contents were cooled to 65°C. Mixtures F5 and G5 were added and the contents of the reactor were maintained at 65°C with stirring for 1 hour, after which the reactor contents were cooled to room temperature. The resulting emulsion particles had a diameter of 0.58 µm as measured by a Malvern Instruments particle size analyzer Serial Number MAL500864.

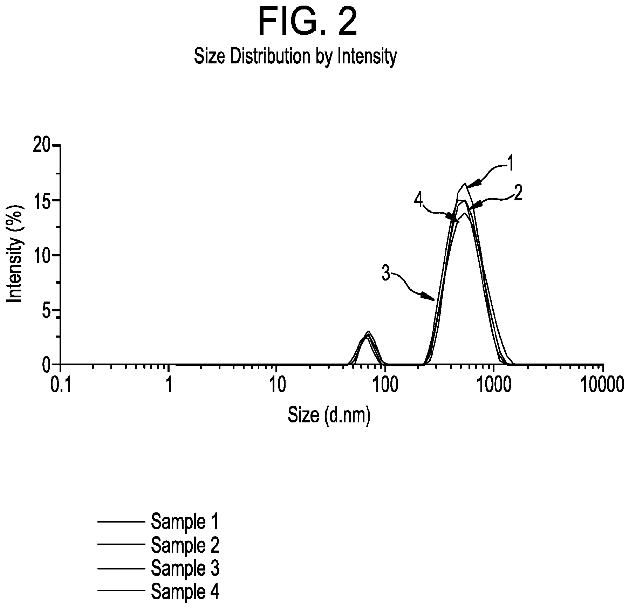

The particle size distribution curves shown in Figure 2 depict evidence of two modes with the relevant statistics shown in Table 7, below.

**Table 7: Particle size distribution data for Example 4, oligomer seed prepared with TREM LF-40.**

| Position | Diameter (nm) | Intensity (%) | Width (nm) |
|---|---|---|---|
| Peak-1 | 577.4 | 92.9 | 212.2 |
| Peak-2 | 69.37 | 7.1 | 9.0 |

Note that the marked difference between the two oligomer seeds (Comparative Example 2 and Example 5) is revealed by the presence of the broad distribution of the main mode and presence of a second mode of significantly large particle size diameter as compared to the particle size distribution obtained from the oligomer seed (Example 5) that was prepared with the co-polymerizable surfactant. The latter particle size distribution curve shows evidence of two modes: the main and minor modes are both within the expected average particle size diameter ≤ 0.6 µm. The presence of the small mode does not compromise the ultimate particle size distribution of the oligomer seed. This is because the seed expansion will not occur beyond the predetermined size (5 µm) of the expected particle size when the oligomer is used as a seed in the post synthesis of bead particles.

### Example 6

The particles in the emulsion of Example 5 were expanded to create 5 µm diameter divergent lenses using n-butyl acrylate and allyl methacrylate in Stage I which was then followed by Stage II copolymerization of methyl methacrylate and ethyl acrylate. The following mixtures A6-G6 shown in Table 8 were prepared with deionized water:

**Table 8**

| Mixture | Component | Parts by Weight |
|---|---|---|
| Stage I | | |
| A6 | Water | 138.50 |
| B6 | | |
| | Aqueous emulsion from Example 5 at 29.88% solids | 0.105 |
| C6 | *n*-Butyl Acrylate | 76.80 |
| | Allyl Methacrylate | 3.20 |
| | 10% aqueous Sodium Dodecylbenzenesulfonate | 0.28 |
| | Water | 33.12 |
| D6 | *t*-Butyl Peroctoate | 0.427 |
| | 10% aqueous Sodium Dodecylbenzenesulfonate | 0.003 |
| | Water | 2.96 |

| Stage II | | |
|---|---|---|
| E6 | Methyl Methacrylate | 19.20 |
| | Ethyl Acrylate | 0.80 |
| F6 | Sodium Formaldehyde Sulfoxylate | 0.062 |
| | Water | 6.67 |
| | 10% aqueous Sodium Dodecylbenzenesulfonate | 0.017 |
| G6 | *t*-Butyl Hydroperoxide 70% | 0.089 |
| | Water | 10.05 |
| | 10% aqueous Sodium Dodecylbenzenesulfonate | 0.037 |

A6 was added to the reactor of the first step and was heated to 90°C with stirring. The air in the reactor was replaced by nitrogen. When the reactor temperature stabilized at 90°C, Mixture B6 was charged to the reactor. Mixture C6 was emulsified with a homogenizer and charged to the reactor. The reactor contents were stirred at 60°C for 1 hour. Mixture D6 was emulsified with a homogenizer and charged to the reactor. After 1 hour of agitation at 60°C, the reactor was gradually heated to 65-70°C while an exothermic polymerization occurred. After reaching peak temperature, the agitation was continued while the reactor was cooled to 73°C in 30 minutes. Half of Mixture F6 was then charged to the reactor. Mixtures E6, the remainder of F6, and G6 were then separately added to the reactor over a period of 2 hours. The temperature was maintained between 73-75°C and stirring continued for 1 hour before the reactor was cooled to room temperature. The resulting emulsion particles had a diameter of 4.32 µm and 0.0% of oversize particles in the size range of 19.95 to 28.32 µm. as measured by CPS disc centrifuge particle size analyzer.

## Claims

1. A process for making acrylic bead particles comprising mixing at least one monomer with oligomer seed particles and at least one initiator wherein the mixing is performed under conditions in which the at least one monomer is capable of forming oligomer or polymer or a mixture thereof,
wherein the oligomer seed particles are made by the process of:
making preseed particles comprising the steps of:
mixing initial seed latex particles; a monomer mixture comprising at least one monomer and at least one copolymerizable surfactant, at least
one initiator; and a chain transfer agent to form the preseed particles,
mixing the preseed particles, a monomer mixture comprising at least one monomer and at least one copolymerizable surfactant, and at least one initiator to form oligomer seed particles.

2. A process in accordance with claim 1 wherein the copolymerizable surfactant is selected from the group consisting of nonionic surfactants, ionic surfactants, amphoteric surfactants, and combinations thereof.

3. A process in accordance with claims 1 or 2 wherein the preseed particles have a mean particle diameter of from 50 to 300 nanometers.

4. A process in accordance with claim 1 wherein the oligomer seed particles have a mean particle diameter of 0.1 to 1 µm.

## Patentansprüche

1. Verfahren zum Herstellen von Acrylkügelchenpartikeln, umfassend ein Mischen mindestens eines Monomers mit Oligomersaatpartikeln und mindestens eines Initiators, wobei das Mischen unter Bedingungen durchgeführt wird, in denen das mindestens eine Monomer in der Lage ist, Oligomer oder Polymer oder eine Mischung davon zu bilden,
wobei die Oligomersaatpartikel durch das Verfahren hergestellt werden:
Herstellen von Vorsaatpartikeln, umfassend die Schritte:
Mischen anfänglicher Saatlatexpartikel; einer Monomermischung, umfassend mindestens ein Monomer und mindestens ein copolymerisierbares Tensid, mindestens eines Initiators; und eines Kettenübertragungsmittels, um die Vorsaatpartikel zu bilden,
Mischen der Vorsaatpartikel, einer Monomermischung, umfassend mindestens ein Monomer und mindestens ein copolymerisierbares Tensid, und mindestens eines Initiators, um Oligomersaatpartikel zu bilden.

2. Verfahren nach Anspruch 1, wobei das copolymerisierbare Tensid aus der Gruppe ausgewählt ist, bestehend aus nichtionischen Tensiden, ionischen Tensiden, amphoteren Tensiden und Kombinationen davon.

3. Verfahren nach Anspruch 1 oder 2, wobei die Vorsaatpartikel einen mittleren Partikeldurchmesser von 50 bis 300 Nanometer aufweisen.

4. Verfahren nach Anspruch 1, wobei die Oligomersaatpartikel einen mittleren Partikeldurchmesser von 0,1 bis 1 µm aufweisen.

## Revendications

1. Procédé de fabrication de particules de billes acryliques comprenant le mélange d'au moins un monomère avec des particules de germe d'oligomère et d'au moins un initiateur dans lequel le mélange est mis en oeuvre dans des conditions dans lesquelles l'au moins un monomère est capable de former un oligomère ou un polymère ou un mélange de ceux-ci,
dans lequel les particules de germe d'oligomère sont fabriquées par le procédé consistant à :
fabriquer des particules de pré-germe comprenant les étapes consistant à :
mélanger des particules de latex de germe initiales ; un mélange de monomères comprenant au moins un monomère et au moins un agent tensioactif copolymérisable, au moins un initiateur ; et un agent de transfert de chaîne afin de former les particules de pré-germe,
mélanger les particules de pré-germe, un mélange de monomères comprenant au moins un monomère et au moins un agent tensioactif copolymérisable, et au moins un initiateur afin de former des particules de germe d'oligomère.

2. Procédé selon la revendication 1, dans lequel l'agent tensioactif copolymérisable est choisi dans le groupe constitué par les agents tensioactifs non ioniques, les agents tensioactifs ioniques, les agents tensioactifs amphotères, et des combinaisons de ceux-ci.

3. Procédé selon les revendications 1 ou 2, dans lequel les particules de pré-germe ont un diamètre moyen de particules allant de 50 à 300 nanomètres.

4. Procédé selon la revendication 1, dans lequel les particules de germe d'oligomère ont un diamètre moyen de particule de 0,1 à 1 µm.
